(19) Europäisches Patentamt / European Patent Office / Office européen des brevets

(11) **EP 3 999 217 B1**

(12) **FASCICULE DE BREVET EUROPEEN**

(45) Date de publication et mention
de la délivrance du brevet:
**18.12.2024 Bulletin 2024/51**

(21) Numéro de dépôt: **20736748.3**

(22) Date de dépôt: **10.07.2020**

(51) Classification Internationale des Brevets (IPC):
**B01D 61/14** *(2006.01)*     **B01D 67/00** *(2006.01)*
**B01D 71/02** *(2006.01)*     **B01D 63/06** *(2006.01)*

(52) Classification Coopérative des Brevets (CPC):
**B01D 61/147; B01D 63/066; B01D 67/00411;
B01D 71/0215; C04B 35/565; C04B 38/0054;
C04B 38/0058; C04B 38/0061; C04B 38/0064;
C04B 38/0074; C04B 41/52;** C04B 2111/00793;
C04B 2235/5445; C04B 2235/5454;
C04B 2235/606;                         (Cont.)

(86) Numéro de dépôt international:
**PCT/EP2020/069675**

(87) Numéro de publication internationale:
**WO 2021/009084 (21.01.2021 Gazette 2021/03)**

(54) **FILTRE COMPRENANT UNE COUCHE SEPARATRICE EN CARBURE DE SILICIUM**

FILTER MIT EINER SILIKONCARBID-SEPARATORSCHICHT

FILTER COMPRISING A SILICONE CARBIDE SEPARATOR LAYER

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **18.07.2019 FR 1908171**

(43) Date de publication de la demande:
**25.05.2022 Bulletin 2022/21**

(73) Titulaire: **SAINT-GOBAIN CENTRE DE
RECHERCHES
ET D'ETUDES EUROPEEN
92400 Courbevoie (FR)**

(72) Inventeurs:
• **COEURET, Xavier
84370 BEDARRIDES (FR)**
• **VINCENT, Adrien
13750 ORGON (FR)**

(74) Mandataire: **Saint-Gobain Recherche
41 Quai Lucien Lefranc
93300 Aubervilliers (FR)**

(56) Documents cités:
**EP-A1- 2 559 470          FR-A1- 2 587 026
FR-A1- 3 052 682          US-A1- 2016 121 272
US-A1- 2018 169 588**

EP 3 999 217 B1

(52) Classification Coopérative des Brevets (CPC):
(Cont.)
C04B 2235/785

**Description**

L'invention se rapporte au domaine des structures filtrantes en un matériau inorganique, destinées à la filtration des liquides, En particulier les structures revêtues d'une membrane afin de séparer des particules ou des molécules d'un liquide, plus particulièrement de l'eau.

On connaît depuis longtemps des filtres utilisant des membranes céramiques ou non céramiques pour réaliser la filtration de fluides variés, notamment d'eaux polluées. Ces filtres peuvent fonctionner selon le principe de la filtration frontale, cette technique impliquant le passage du fluide à traiter à travers un média filtrant, perpendiculairement à sa surface. Cette technique est limitée par l'accumulation de particules et la formation d'un gâteau à la surface du média filtrant. Cette technique est donc plus particulièrement adaptée à la filtration de liquides peu chargés en polluants (c'est-à-dire les particules liquides ou solides en suspension).

Selon une autre technique à laquelle se rapporte également la présente invention, on utilise la filtration tangentielle, qui, au contraire, permet de limiter l'accumulation de particules, grâce à la circulation longitudinale du fluide à la surface de la membrane. Les particules restent dans le flux de circulation alors que le liquide peut traverser la membrane sous l'effet de la pression. Cette technique assure une stabilité des performances et du niveau de filtration.

Les points forts de la filtration tangentielle sont donc sa facilité de mise en oeuvre, sa fiabilité grâce à l'utilisation des membranes organiques et/ou inorganiques dont la porosité est adaptée pour effectuer ladite filtration, et son fonctionnement en continu. La filtration tangentielle fait appel à peu ou pas d'adjuvant et fournit deux fluides séparés qui peuvent être tous deux valorisables : le concentrât (également appelé retentât) et le filtrat (également appelé perméat); elle est considérée comme un procédé propre qui respecte l'environnement. Les techniques de filtration tangentielle sont notamment utilisées pour la microfiltration ou l'ultrafiltration. La configuration tangentielle requiert le plus souvent l'utilisation d'au moins deux pompes, l'une de pressurisation (ou gavage) et l'autre de recirculation. La pompe de recirculation présente souvent l'inconvénient d'une consommation énergétique conséquente. La mise en oeuvre de dispositifs filtrants garantissant de forts débits du filtrat permettrait de limiter la consommation d'énergie.

La présente invention est donc adaptée tout aussi bien aux filtres tangentiels qu'aux filtres à filtration frontale.

On connaît ainsi de la technique actuelle de nombreuses structures de filtres fonctionnant suivant les principes de la filtration tangentielle ou de la filtration frontale. Elles comprennent ou sont constituées par exemple à partir de supports tubulaires ou parallélépipédiques en un matériau inorganique poreux formés de parois délimitant des canaux longitudinaux parallèles à l'axe desdits supports.

Dans le cas de filtres tangentiels le filtrat passe au travers des parois puis est évacué au niveau de la surface extérieure périphérique du support poreux. Ces filtres sont plus particulièrement adaptés pour filtrer des liquides fortement chargés en particules.

Dans le cas des filtres frontaux les canaux longitudinaux sont normalement bouchés à une extrémité, par exemple alternativement, de manière à former des canaux d'entrée et des canaux de sortie séparés par les parois des canaux, les canaux d'entrée et/ou de sortie étant revêtus de la membrane filtrante au travers duquel tout le liquide passe, les particules étant retenues par la membrane.

La surface desdits canaux est le plus souvent habituellement recouverte d'une membrane, de préférence en un matériau inorganique poreux, appelée membrane, couche membranaire ou couche séparatrice membranaire dans la présente description, dont la nature et la morphologie sont adaptées pour arrêter les molécules ou les particules dont la taille est proche ou supérieure au diamètre médian des pores de ladite membrane, lorsque le filtrat se répand dans la porosité du support poreux sous la pression du fluide traversant le filtre. La membrane est classiquement déposée sur la surface interne des canaux par un procédé d'enduction d'une barbotine du matériau inorganique poreux suivie d'un traitement thermique de consolidation, notamment un séchage et le plus souvent d'un frittage des membranes céramiques.

Selon une autre technique, on connaît des dispositifs filtrants non monolithiques consistant en une succession de plaques poreuses au sein d'une enceinte, dans laquelle le liquide à filtrer est le plus souvent agité de manière à favoriser un régime turbulent. Ces dispositifs favorisent les forces de cisaillement au sein du liquide au contact des plaques poreuses et sont plus performants pour la dépollution des liquides extrêmement chargés ou très visqueux.

Différentes formes de plaques ont été proposées par exemples des plaques céramiques poreuses, pleines ou comprenant une cavité ou des canaux internes, permettant au filtrat de s'évacuer comme par exemple selon la figure 7 de WO2009/039861A1 ou encore comme le propose la publication EP2543420A1. De telles plaques peuvent présenter une membrane déposée sur les plus grandes faces de la plaque filtrante comme le décrit par exemple DE202010015318U1. Certaines plaques ont été décrites avec une cavité interne comprenant un matériau de drainage, comme cela est décrit par exemple par EP2910299A1.

De nombreuses publications indiquent différentes configurations de filtre membrane qui visent à obtenir un filtre présentant les propriétés optimales pour l'application et en particulier :

- une perte de charge faible,

- un flux de perméat sortant le plus élevé possible,
- une forte résistance mécanique et en particulier une résistance à l'abrasion élevée du fait du passage du liquide à filtrer chargé en particules à la surface de la membrane,
- une forte sélectivité vis-à-vis des espèces polluantes à filtrer,
- idéalement une résistance chimique élevée notamment à l'acidité.

Les travaux menés antérieurement par la société déposante ont montré, selon une autre approche complémentaire, qu'au sein de telles structures filtrantes, il était utile d'agir sur la composition chimique de la membrane séparatrice, pour améliorer encore les performances de filtration de la structure, voire la durée de vie du filtre. Ces travaux sont décrits dans la demande de brevet publiée sous WO2016097661A1.

Malgré l'amélioration notable en termes de résistance à l'abrasion, la résistance au contre-lavage, étape nécessaire à la régénération de la membrane, reste très perfectible. Durant cette étape, de l'eau sous pression est injectée à contre-courant pour décolmater les polluants accumulés dans la porosité du filtre. Il a été constaté par la société déposante que chaque contre-lavage sollicitait fortement mécaniquement la membrane. Au final, la société déposante a constaté une augmentation de la perméabilité de la couche séparatrice membranaire au fur et à mesure des opérations de contre-lavage, indice d'un décollement progressif de celle-ci et donc d'une perte de son efficacité.

D'autres travaux menés par la société déposante ont montré qu'il est encore possible d'améliorer la performance d'une membrane constituée essentiellement de carbure de Silicium, en modifiant cette fois les caractéristiques structurales intrinsèques de la membrane. De nombreux documents de l'art décrivent différentes compositions possibles pour la membrane céramique en matériau inorganique poreux, sans toutefois établir de relation causale entre la composition du matériau constituant la membrane et les performances du filtre.

Selon une réalisation, la demande publiée sous WO2005005016A1 ou le brevet correspondant US 7699903B2 décrivent une couche séparatrice membranaire en carbure de silicium obtenue à partir d'un mélange de deux poudres de particules de SiC de forme cristallographique alpha frittées ensemble à une température comprise entre 1750 et 1950°C. La demande FR2549736 propose d'augmenter le flux de liquide filtré en spécifiant la taille des particules formant la couche filtrante par rapport à celles formant le support. Les couches divulguées présentent cependant un flux considéré comme faible au regard de la présente invention.

D'autres publications, par exemple la demande de brevet EP3009182A1, proposent des membranes de silicium et de carbure de silicium obtenues à partir de barbotines comprenant trois poudres de taille médiane différentes, respectivement comprises dans les domaines 2 à 4 micromètres, 0,5 à 0,9 micromètres et 0,2 à 0,4 micromètres, avant cuisson à une température comprise entre 1500 et 1900°C, de préférence une poudre parmi celles-ci étant une poudre de Silicium. La résistance à l'abrasion d'une telle membrane est apparue trop faible pour permettre l'obtention de filtres ayant une durée de vie prolongée.

Des membranes comprenant de la carbure de silicium sont par ailleurs divulguées dans les documents FR3052682, FR2587 026, US2018/169588, US2016/121272 et EP2559470.

L'objet de la présente invention est de fournir un filtre incorporant une membrane sous la forme d'une séparatrice résistante mécaniquement quelles que soient ses conditions d'utilisation et en particulier lors de contre-lavage successifs nécessaires à son bon fonctionnement, et dont la longévité s'en trouve ainsi améliorée, pour des performances de filtration identique ou sensiblement améliorée vis-à-vis de réalisations antérieures.

En particulier il a été mis en évidence par les travaux de la société déposante, décrits ci-après, qu'il est possible d'obtenir un optimum en termes de résistance au contre-lavage, de flux de filtration, tout en conservant une très bonne sélectivité, par une sélection appropriée du matériau constitutif desdites membranes, ledit matériau pouvant être obtenu par le procédé selon l'invention.

Tout particulièrement, il a été mis en évidence par les travaux de la société déposante, décrits ci-après, un avantage non encore décrit dans l'art des filtres membranes en carbure de silicium (SiC) recristallisé, en particulier sous forme alpha, destinées à la filtration des liquides. Il a été possible selon la présente invention d'obtenir des membranes très résistantes à l'abrasion et surtout très résistantes à un fort rétro-lavage, sans accroissement de la taille des pores et donc sans réduction de la sélectivité du filtre, comme il est habituellement observé sur les membranes non oxydes, en particulier en carbure de silicium (SiC) obtenues par frittage à haute température.

Dans la présente description, on utilise indifféremment les termes membranes séparatrices, couche séparatrice ou couche séparatrice membranaire pour désigner de telles couches permettant la filtration.

L'invention se rapporte ainsi selon un premier aspect à une structure filtrante ou un filtre configuré pour la filtration d'un fluide tel qu'un liquide, comprenant ou constitué par un élément support fait dans un matériau céramique poreux et muni d'une couche séparatrice membranaire permettant ladite filtration.

Plus précisément, la présente invention se rapporte à un filtre pour la filtration d'un fluide tel qu'un liquide, comprenant ou constitué par un élément support fait dans un matériau céramique poreux, au moins une portion de la surface dudit élément support étant recouvert d'une couche séparatrice membranaire poreuse, ladite couche séparatrice membranaire étant constituée essentiellement de carbure de silicium (SiC), sa porosité étant comprise entre 10 et 70% en volume, le diamètre médian de ses pores étant compris entre 50 nanomètres et 500 nanomètres, son épaisseur moyenne étant comprise entre 1 micromètre et 30 micromètres, et sa tortuosité étant inférieure à 1,7.

Un filtre dont la membrane présente les caractéristiques décrites précédemment révèle tout particulièrement une résistance remarquable au contre-lavage tout en maintenant un flux de filtrat élevé sans accroissement de la taille des pores et donc sans réduction de la sélectivité du filtre.

Ledit élément support peut se présenter sous toute forme connue, en particulier sous la forme d'une plaque, d'un disque, d'un tube ou d'un parallélépipède. Au moins une portion de la surface du support est recouverte par une couche d'un matériau dont les caractéristiques structurales permettent de filtrer les impuretés présentes dans un fluide, en particulier un liquide, traversant ladite couche puis ledit support.

Par exemple ledit support peut être délimité par une surface externe et comprendre dans sa portion interne un ensemble de canaux adjacents délimitant une surface interne, lesdits canaux étant de préférence d'axes parallèles entre eux et séparés les uns des autres par des parois d'un matériau céramique poreux, au moins une partie de ladite surface externe et/ou au de la surface interne desdits canaux étant recouverte d'une couche séparatrice membranaire poreuse. Lors du fonctionnement du filtre, cette couche, comme indiqué précédemment, entre en contact avec ledit fluide à filtrer, le perméat traverse ledit matériau céramique poreux puis est évacué par un moyen d'évacuation. Dans le cas particulier d'un filtre tubulaire ou parallélépipédique le perméat peut être évacué par la surface externe selon un mode de filtration tangentielle ou par une partie des canaux non recouverts de la couche séparatrice membranaire selon un mode de filtration frontale.

Le support selon l'invention peut également se présenter sous d'autres formes telles que des plaques comme déjà décrit précédemment, présentant optionnellement dans son épaisseur des canaux d'évacuation du filtrat.

Selon des caractéristiques additionnelles optionnelles et avantageuses de la couche séparatrice membranaire :

- Le SiC représente plus de 95%, de préférence plus de 97%, voire plus de 99% de la masse du matériau constituant la couche séparatrice membranaire.
- Le SiC constituant les grains est essentiellement sous forme cristallographique alpha, comme cela peut être déterminé par analyse de diffraction aux rayons X.
- La porosité de la couche séparatrice membranaire est comprise de préférence, en volume, entre 30 et 60%, de manière plus préférée entre 35 et 50%, voire même entre 35 et 45%.
- Le diamètre médian de pores est compris entre 60 nanomètres et 450 nanomètres, de préférence entre 75 et 400 nanomètres, en particulier entre 100 et 300 nanomètres.
- L'épaisseur moyenne de la couche séparatrice est comprise entre 3 micromètres et 20 micromètres, de préférence encore entre 4 et 15 micromètres, voire entre 5 et 10 micromètres.
- La tortuosité de la couche constituant la couche séparatrice membranaire poreuse est inférieure à 1,6, de préférence inférieure à 1,5, voire inférieure ou égale 1,4, ou même inférieure à 1,3.
- La tortuosité de la couche constituant la couche séparatrice membranaire poreuse est supérieure à 1, de préférence est supérieure ou égale à 1,1.
- La taille médiane des grains de SiC dans ladite couche séparatrice membranaire est de préférence supérieure à 60 nanomètres, de préférence supérieure à 80 nanomètres, de manière plus préférée supérieure à 100 nanomètres, voire supérieure à 150 nanomètres.
- La taille médiane des grains de SiC dans ladite couche séparatrice membranaire est inférieure à 400 nanomètres, de préférence inférieure à 300 nanomètres, de manière plus préférée inférieure à 250 nanomètres, voire inférieure à 200 nanomètres. De telles tailles peuvent être mesurées par analyse de clichés obtenus par microscopie électronique à balayage (MEB).

Dans le matériau constituant la couche séparatrice membranaire selon l'invention, de l'oxygène en particulier voire aussi de l'azote peuvent être présent dans les grains par insertion dans le réseau cristallin du SiC et/ou partiellement à la surface des grains et aux joints de grain. Selon un mode possible voire préféré, l'azote et/ou l'oxygène sont uniquement présents dans la couche séparatrice sous forme d'impuretés inévitables.

En ce qui concerne le support poreux, on donne les indications suivantes concernant des modes de réalisation préférés mais non limitatifs de la présente invention :

- Ledit élément support se présente sous la forme d'une plaque, d'un disque, d'un tube ou d'un parallélépipède.
- La porosité du matériau constituant l'élément support poreux est comprise entre 20 et 70%, préférentiellement entre 30 et 60%.
- Le diamètre médian de pores du matériau constituant l'élément support poreux est compris entre 5 et 50 micromètres, de manière plus préférée entre 10 et 40 micromètres.
- la tortuosité de l'élément support est supérieure à 1, voire supérieure à 1,1, voire supérieure à 1,2, voire supérieure à 1,3, voire supérieure à 1,4 et/ou inférieure à 2, voire inférieure à 1,9, voire inférieure à 1,8, voire inférieure à 1,7.

- L'élément support poreux comprend et de préférence est constitué en un matériau céramique, de préférence un matériau céramique non oxyde, de préférence choisi parmi le carbure de Silicium SiC, en particulier le SiC fritté en phase liquide ou en phase solide, le SiC recristallisé, le nitrure de Silicium, en particulier $Si_3N_4$, l'oxynitrure de Silicium, en particulier $Si_2ON_2$, l'oxynitrure de Silicium et d'Aluminium, ou une combinaison de ceux-ci. De préférence le support est constitué essentiellement de carbure de Silicium, de manière encore plus préférée est constitué essentiellement de SiC recristallisé.
- La base de la forme tubulaire ou parallélépipédique est polygonale, de préférence carrée ou hexagonale, ou circulaire. La forme tubulaire ou parallélépipédique présente un axe central longitudinal de symétrie (A).
- Notamment dans le cas d'un filtre à filtration frontale, les canaux sont bouchés à une extrémité, de préférence alternativement, afin de définir des canaux d'entrée et des canaux de sortie de façon à forcer le liquide entrant par les canaux d'entrée à la surface desquels est déposée la membrane au travers de laquelle le liquide passe avant d'être évacué par les canaux de sortie.
- Si le filtre est tangentiel, l'extrémité du support tubulaire peut être en contact avec une plaque étanche au liquide à filtrer et perforée à l'endroit des canaux qui lui font face de manière à former un support filtrant placé dans une tubulure ou un système de filtration. Une autre possibilité peut consister à introduire le filtre tangentiel dans la tubulure un joint périphérique étanche à chaque extrémité et autour du filtre de manière à assurer le flux de perméat indépendamment du flux de concentrât.
- Les éléments sont de section hexagonale, la distance entre deux côtés opposés de la section hexagonale étant comprise entre 20 et 80 mm.
- Les conduits des éléments filtrants sont ouverts sur leurs deux extrémités.
- Les conduits des éléments filtrants sont alternativement bouchés sur la face d'introduction du liquide à filtrer et sur la face opposée.
- Les conduits des éléments filtrants sont ouverts sur la face d'introduction du liquide et fermés sur la face de récupération.
- Une majorité des conduits, notamment plus de 50%, voire plus de 80%, sont de section carrée, ronde ou oblongue, de préférence ronde, et de préférence encore ont un diamètre hydraulique compris entre 0,5mm et 10mm, de préférence entre 1mm et 5mm. Le diamètre hydraulique $D_h$ d'un canal est calculé, dans un plan de section transversal P quelconque de la structure tubulaire, à partir de la surface de la section du canal S dudit canal et de son périmètre P, selon ledit plan de section et par application de l'expression classique suivante :

$$Dh = 4 \times S / P$$

Comme indiqué précédemment, le filtre selon l'invention comprend de préférence, outre la couche séparatrice membranaire, une ou plusieurs couches intermédiaires, disposées entre le matériau constituant l'élément support et le matériau constituant la couche séparatrice membranaire. Le rôle de cette (ces) couche(s) dite(s) intermédiaires consiste à faciliter l'accrochage de la couche séparatrice et/ou à éviter que les particules de la membrane séparatrice passent à travers le support, notamment lors d'un dépôt par enduction.

Le filtre peut comprendre en outre une ou plusieurs couches intermédiaires disposées entre le matériau constituant l'élément support et le matériau constituant la couche séparatrice membranaire.

De préférence, la ou les couches intermédiaires sont essentiellement constituées de SiC.

De préférence, au moins une couche intermédiaire présente(nt) un diamètre médian de pores au moins deux fois supérieur, voire au moins trois fois supérieur à celui de la couche séparatrice membranaire et de préférence une épaisseur comprise entre 40 et 100 micromètres.

Avantageusement, chaque couche intermédiaire présente une épaisseur moyenne comprise entre 5 et 100 micromètres, de préférence comprise entre 15 et 70 micromètres, de préférence comprise entre 20 et 80 micromètres, voire entre 30 et 60 micromètres.

En particulier, selon un mode possible le filtre comprend une couche première intermédiaire de diamètre médian de pores 0,5 à 3 micromètres, et/ou de porosité de 30 à 50% en volume, et/ou de taille médiane de grains comprise de 5 à 15 micromètres, selon une épaisseur moyenne de 5 à 90 micromètres.

Selon un autre mode possible le filtre comprend une couche première couche intermédiaire, déposée sur le support, dont le diamètre médian de pores est de 0,5 à 3 micromètres, et/ou la porosité de 30 à 60% en volume, et/ou la taille médiane de grains est comprise de 5 à 15 micromètres selon une épaisseur moyenne de 5 à 50 micromètres. Sur la dite première couche intermédiaire est déposée une deuxième couche intermédiaire, couche de diamètre médian de pores 0,4 à 0,8 micromètres, et/ou de porosité de 30 à 60% en volume, et/ou de taille médiane de grains comprise de 0,5 et 0,9 micromètres selon une épaisseur moyenne de 5 à 90 micromètres.

Dans la présente description, sauf autrement spécifié, tous les pourcentages sont massiques.

Sans qu'il soit besoin de les reporter de nouveau ici, il est bien évident que l'invention porte également sur les couches séparatrices membranaires répondant à toutes les caractéristiques préférées décrites précédemment, en relation avec la structure filtrante dans laquelle ladite couche est incorporée.

Un filtre selon l'invention et tel que décrit précédemment trouve particulièrement son utilisation dans la filtration de liquides, en particulier d'un liquide aqueux, par exemple un jus de fruit, ou d'un liquide alcoolique en particulier du vin, de la bière ou un spiritueux.

Enfin, l'invention se rapporte à un procédé de fabrication d'un filtre tel que précédemment décrit, notamment un filtre tangentiel ou frontal, comprenant les étapes suivantes :

- préparation d'une barbotine à partir d'une poudre de particules de carbure de silicium de taille moyenne comprise entre 0,05 et 0,4 micromètres, de préférence entre 0,1 et 0,3 micromètres,
- application de ladite barbotine sur au moins une portion de la surface de l'élément support, dans des conditions permettant la formation d'une couche mince de la barbotine, de préférence comprise entre 1 et 50 micromètres,
- séchage puis cuisson sous une atmosphère non oxydante, de préférence neutre, en particulier sous Argon, à une température comprise entre 1400°C et 1600°C, et dans cet intervalle de température pendant un temps suffisant pour l'obtention de la couche séparatrice membranaire, par exemple entre 10 et 120 minutes, de préférence 15 et 45 minutes, ladite couche étant constituée essentiellement carbure de silicium.

Un tel procédé de fabrication peut comprendre en outre, avant l'étape de dépôt de ladite barbotine, une étape de dépôt d'au moins une couche intermédiaire à partir d'une barbotine comprenant une poudre de particules de carbure de silicium dont au moins une fraction des grains présente un diamètre médian inférieure à 1 micromètre et supérieur à 0,1 micromètre.

On donne en outre les indications suivantes :

La porosité ouverte et le diamètre médian de pores du support poreux décrits dans la présente description sont déterminés de manière connue par porosimétrie au mercure selon la norme ISO 15901-1.2005 part 1.

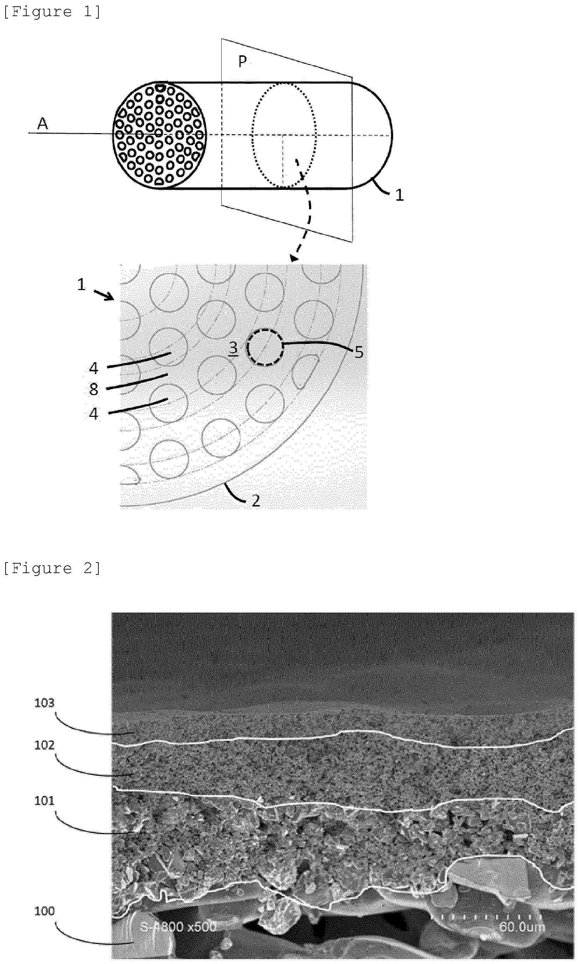

La porosité et le diamètre médian de pores de la couche séparatrice membranaire (et de la ou les couches intermédiaires) sont avantageusement déterminés selon l'invention à l'aide d'un microscope électronique à balayage. Par exemple, on réalise des sections d'une paroi du support en coupe transversale, comme illustré par la figure 2 ci-jointe, de manière à visualiser toute l'épaisseur du revêtement sur une longueur cumulée d'au moins 1,5 cm. L'acquisition des images est effectuée sur un échantillon d'au moins 10 grains. L'aire et le diamètre équivalent de chacun des pores sont obtenus à partir des clichés par des techniques classiques d'analyse d'images, de préférence après une binarisation ou segmentation de l'image visant à en augmenter le contraste. On déduit ainsi une distribution de diamètres équivalents, dont on extrait le diamètre médian de pores. De même on peut déterminer par cette méthode une taille médiane des particules constituant la couche membranaire.

Un exemple de détermination du diamètre médian de pores ou de la taille médiane des particules constituant la couche séparatrice membranaire, à titre d'illustration, comprend la succession des étapes suivantes, classique dans le domaine :

- Une série de clichés en MEB est prise du support avec sa couche séparatrice membranaire observé selon une coupe transversale (c'est-à-dire dans toute l'épaisseur d'une paroi). Pour plus de netteté, les clichés sont effectués sur une section polie du matériau. L'acquisition de l'image est effectuée sur une longueur cumulée de la couche membranaire au moins égal à 1,5 cm, afin d'obtenir des valeurs représentatives de l'ensemble de l'échantillon.
- Les clichés sont de préférence soumis à des techniques de binarisation, bien connues dans les techniques de traitement de l'image, pour augmenter le contraste du contour des particules ou des pores.
- Pour chaque particule ou chaque pore constituant la couche séparatrice membranaire, une mesure de son aire est réalisée. Un diamètre équivalent de pores ou de grain est déterminé(e), correspondant au diamètre d'un disque parfait de même aire que celui mesuré pour ladite particule ou pour ledit pore (cette opération pouvant éventuellement être réalisée à l'aide d'un logiciel dédié notamment Visilog® commercialisé par Noesis) .
- une distribution de taille de particules ou de grains ou de diamètre de pores est ainsi obtenue selon une courbe classique de répartition et une taille médiane des particules et/ou un diamètre médian de pores constituant la couche membranaire sont ainsi déterminés, cette taille médiane ou ce diamètre médian correspondant respectivement au diamètre équivalent divisant ladite distribution en une première population ne comportant que des particules ou de pores de diamètre équivalent supérieur ou égal à cette taille médiane et une deuxième population comportant que des particules de diamètre équivalent inférieur à cette taille médiane ou ce diamètre médian.

La tortuosité est un paramètre bien connu dans le domaine des structures poreuses, comme décrit dans la publication « Tortuosity in electrochemical devices: a review of calculation approaches, International Materials Reviews, 63:2, p47-67 (2018)".

Elle peut être mesurée par analyse d'images d'une série de coupes transversales de la membrane selon différents plans parallèles entre eux et perpendiculaires à la surface filtrante de la couche séparatrice membranaire afin de rendre compte de la structure tridimensionnelle de la microstructure de ladite membrane dans toute son épaisseur. Une technique appropriée est l'utilisation d'un microscope électronique à balayage équipé d'une sonde ionique focalisée ou « FIB » (« focused ion beam » en anglais). Une autre technique possible est la nanotomographie. Les images ont de préférence une résolution minimale de un million de pixels afin d'obtenir une qualité d'image apte à une binarisation ou segmentation suffisante afin de bien distinguer les parois céramiques de la porosité de la membrane sur toute son épaisseur. L'utilisation d'un logiciel comme iMorph© permet d'obtenir une caractérisation géométrique en trois dimensions de la couche membranaire et de calculer la tortuosité. La tortuosité est définie comme le rapport entre le parcours le plus court permettant de traverser la couche séparatrice membranaire dans le sens de son épaisseur, au sein de sa porosité, et la distance ou le segment de droite joignant le point de départ et le point d'arrivée correspondant à ce parcours. Il est possible de mesurer selon la même procédure la tortuosité du support.

Au sens de la présente description et sauf mention contraire, la taille médiane des particules ou le diamètre médian des pores mesurée par microscopie désigne respectivement le diamètre des particules ou de pores au-dessous duquel se trouve 50% en nombre de la population. En revanche s'agissant du diamètre de pores mesuré sur le substrat ou du support par porosimétrie mercure, le diamètre médian correspond à un seuil de 50% de la population en volume.

On appelle « frittage », de façon classique dans le domaine des céramiques (c'est-à-dire au sens indiqué dans la norme internationale ISO 836:2001, point 120), une consolidation par traitement thermique d'un aggloméré granulaire. Le traitement thermique des particules utilisées comme charge de départ pour l'obtention des couches membranaires selon l'invention permet ainsi la jonction et le développement de leurs interfaces de contact par mouvement des atomes à l'intérieur et entre lesdites particules.

Le frittage entre les grains de SiC selon l'invention est normalement essentiellement effectué en phase solide / gaz, la température de frittage étant proche voire supérieure à la température de vaporisation des particules les plus fines constituant le dépôt de la couche séparatrice membranaire.

Le diamètre médian $D_{50}$ des poudres de particules utilisées pour réaliser le support ou la couche séparatrice membranaire est donné classiquement par une caractérisation de distribution granulométrique, par exemple au moyen d'un granulomètre laser.

La teneur en SiC peut aussi être mesurée selon un protocole défini selon la norme ANSI B74.15-1992-(R2007) par différence entre carbone total et carbone libre, cette différence correspondant au carbone fixé sous forme de carbure de silicium.

On donne ci-après un exemple non limitatif permettant la réalisation d'un filtre selon l'invention, bien évidemment non limitatif également des procédés permettant d'obtenir un tel filtre et du procédé selon la présente invention:
Selon une première étape, le support filtrant est obtenu par extrusion d'une pâte au travers d'une filière configurée selon la géométrie de la structure à réaliser selon l'invention. L'extrusion est suivie d'un séchage et d'une cuisson afin de fritter le matériau inorganique constituant le support et obtenir les caractéristiques de porosité et de résistance mécanique nécessaire à l'application.

Par exemple, lorsqu'il s'agit d'un support en SiC, il peut être en particulier obtenu selon les étapes de fabrication suivantes :

- malaxage d'un mélange comportant des particules de carbure de silicium de pureté supérieure à 98% et présentant une granulométrie telle que 75% en masse des particules présente un diamètre supérieur à 30 micromètres, le diamètre médian en masse de cette fraction granulométrique (mesuré par granulomètre laser) étant inférieur à 300 micromètres. Le mélange comporte aussi un liant organique du type dérivé de cellulose. On ajoute de l'eau et on malaxe jusqu'à obtenir une pâte homogène dont la plasticité permet l'extrusion, la filière étant configurée pour l'obtention des monolithes selon l'invention.
- séchage des monolithes crus par micro-onde pendant un temps suffisant pour amener la teneur en eau non liée chimiquement à moins de 1% en masse.
- cuisson jusqu'à une température d'au moins 1300°C dans le cas de support filtrant à base de SiC fritté en phase liquide, de nitrure de Silicium, d'oxynitrure de Silicium, d'oxynitrure de Silicium et d'Aluminium ou même de BN et d'au moins 1900°C et inférieure à 2400°C dans le cas d'un support filtrant à base de SiC recristallisé ou fritté en phase solide. Dans le cas d'un support filtrant en nitrure ou oxynitrure l'atmosphère de cuisson est de préférence azotée. Dans le cas d'un support filtrant en SiC recristallisé l'atmosphère de cuisson est de préférence neutre et plus particulièrement d'argon. La température est maintenue typiquement pendant au moins 1 heure et de préférence pendant au moins 3 heures dans un four cellule à pression ambiante. Le matériau obtenu présente une porosité ouverte de 20 à 60% en volume et un diamètre médian de pores de l'ordre de 5 à 50 micromètres.

Le support filtrant est ensuite revêtu selon l'invention d'une membrane (ou couche séparatrice membranaire). Une ou plusieurs couches peuvent être déposées afin de former une membrane selon diverses techniques connues de l'homme du métier : techniques de dépôt à partir de suspensions ou de barbotines, techniques de dépôt chimique en phase vapeur (CVD) ou de projection thermique, par exemple projection plasma (plasma spraying) .

De préférence les couches de membrane sont déposées par enduction à partir de barbotines ou de suspensions. Une première couche (appelée couche intermédiaire) est préférentiellement déposée en contact avec le matériau poreux constituant le substrat, jouant le rôle de couche d'accrochage.

Un exemple non limitatif d'une formulation minérale de la couche intermédiaire comporte 30% à 60%, de préférence entre 35 et 50% en masse de poudre (s) de SiC de diamètre médian de 2 à 20 microns, le reste étant de l'eau déminéralisée ou déionisée, (hormis les éventuels additifs organiques). Selon un mode possible, une deuxième couche intermédiaire est déposée sur la première couche intermédiaire. La formulation de cette deuxième couche comprend en masse de 20 à 65%, de préférence entre 35 et 60% d'une poudre de SiC de diamètre médian 0,5 et 0,9 micromètres, le complément à 100% étant apporté par l'eau déminéralisée (hormis les additifs ou ajouts organiques).

Selon un autre exemple non limitatif, la couche intermédiaire est unique et sa formulation comprend en masse de 15 à 25% d'une poudre de SiC de diamètre médian 7 à 15 micromètres, 5 à 15% d'une poudre de SiC de diamètre médian 1,5 à 5 micromètres et 0,5 à 5% d'une poudre de SiC de diamètre médian 0,1 à 1,0 micromètres, de préférence de 0,13 à 0,3 micromètres, le complément à 100%, de préférence entre 60 et 80%, étant apporté par l'eau déminéralisée ou déionisée (hormis les additifs ou ajouts organiques).

Bien que préférentiellement présente, dans certainesconfigurations de filtre, cette deuxième couche intermédiaire peut être absente sans sortir du cadre de l'invention.

Une autre couche de taille médiane de pores plus faible est ensuite déposée sur la dernière couche intermédiaire (ou directement sur le support), qui constitue la membrane ou couche séparatrice membranaire proprement dite. La porosité de cette dernière couche est adaptée pour conférer à l'élément filtrant ses propriétés finales de filtration, en particulier sa sélectivité par une valeur ajustée de son diamètre médian de pores. Un exemple non limitatif d'une formulation minérale de couche séparatrice comporte 2 à 20%, de préférence entre 3 et 10%, en masse de poudre(s) de SiC de diamètre médian de 0,05 à 0,5 micromètres, de préférence de 0,1 à 0,3 micromètres, le reste étant de l'eau déminéralisée, (hormis les éventuels additifs organiques).

Afin de contrôler la rhéologie des barbotines et respecter une viscosité adéquate (typiquement comprise entre 0,01 à 1,5 Pa.s de préférence 0,1 à 0,8 Pa.s sous un gradient de cisaillement de $1s^{-1}$ mesurée à 22°C selon la norme DINC33-53019), des agents épaississants (selon des proportions typiquement entre 0,01 et 2% de la masse d'eau). Des agents liants (typiquement entre 0,5 et 20% de la masse de poudre de SiC), des agents dispersants (entre 0,01 et 1% de la masse de poudre de SiC) peuvent aussi être ajoutés. Les agents épaississants sont de préférence des dérivés cellulosiques, les agents liants de préférence des PVA ou des dérivés d'acrylique et les agents dispersants sont de préférence du type polymétacrylate d'ammonium.

Des ajouts organiques exprimés en poids de la barbotine, notamment du Dolapix A88 comme agent défloculant par exemple selon une proportion de 0,01 à 0,5% ; de la Tylose par exemple de type MH4000P comme épaississant selon une proportion de 0,01 à 1%, du PVA ou une résine de base acrylique comme agent collant à raison de 0,1 à 2% exprimé en masse d'extrait sec; du monoéthylène glycol comme plastifiant et de l'éthanol à 95% volume comme réducteur de tension de surface, sont plus particulièrement appropriés.

Ces opérations d'enduction permettent typiquement d'obtenir une couche intermédiaire d'épaisseur d'environ 30 à 80 micromètres après séchage. Lors de la deuxième étape d'enduction une couche séparatrice membranaire d'épaisseur par exemple d'environ 3 à 20 micromètres, de préférence entre 5 et 15 micromètres, voire de manière plus préférée entre 5 et 10 micromètres, est obtenue après séchage, cette gamme d'épaisseur n'étant bien entendu en rien limitative.

Les étapes spécifiques d'un procédé selon l'invention pour le dépôt de la couche séparatrice membranaire selon l'invention sur le support, éventuellement au-dessus de la couche intermédiaire décrite précédemment, sont décrites ci-après :
Selon un premier mode de réalisation privilégié, une barbotine est préparée comme indiqué précédemment à partir d'une poudre ou de préférence plusieurs poudres de particules de carbure de silicium de différentes granulométries et en présence de la quantité d'eau permettant de préférence de respecter les conditions de rhéologie et de viscosité décrites précédemment, ainsi qu'en présence des agents organiques nécessaires de préférence de manière à obtenir une barbotine ayant un PH inférieur ou égal à 10.

La barbotine est ensuite appliquée sur l'élément support, dans des conditions et par des moyens adaptés pour permettre la formation d'une couche mince sur la partie interne des canaux dudit filtre, tels que notamment décrits précédemment.

Après application de cette couche, le support est d'abord séché à température ambiante typiquement pendant au moins 10 minutes puis chauffée à 60°C pendant au moins 12 heures. Finalement, une couche séparatrice membranaire poreuse à la surface des canaux du support est obtenue par frittage dans un four, dans une atmosphère non oxydante, de préférence sous une atmosphère comprenant très majoritairement ou exclusivement de l'argon (Ar)-à la pression atmosphérique (1 bar). La température de cuisson est typiquement d'au moins 1400°C, de préférence d'au moins 1500°C et est préférentiellement inférieure à 1600°C pendant un temps suffisant, notamment d'au moins une heure, pour obtenir la membrane telle que décrite précédemment selon l'invention.

L'épaisseur de la couche séparatrice membranaire obtenue est de préférence comprise entre 5 et 15 micromètres. Les analyses de microscopie électronique, de diffraction complétées par la fluorescence X montrent que le matériau ainsi obtenu est constitué essentiellement de grains de SiC alpha.

De façon essentielle à l'obtention des propriétés recherchées selon l'invention, les poudres de carbure de silicium initialement choisies dans le procédé de préparation de la couche membranaire séparatrice sont sélectionnées selon les critères suivants :

- la poudre de SiC initiale présente une teneur en Si métallique inférieure à 1,0% en masse, de préférence inférieure à 0,5% en masse, voire même inférieure à 0,2% en masse,
- la poudre de SiC initiale présente une teneur en oxygène élémentaire inférieure à 2,0% en masse, de préférence inférieure à 1,5%, voire même inférieure à 1,0%.
- la poudre de SiC initiale présente une teneur en SiC supérieure à 97% en masse,
- Le diamètre médian de la poudre de SiC initiale est inférieur à à 400 nanomètres, de préférence inférieure à 300 nanomètres, de manière plus préférée inférieure à 250 nanomètres, voire inférieure à 200 nanomètres.

Si le filtre est configuré pour une application en filtration tangentielle, il peut être fixé sur une plaque perforée à l'endroit des ouvertures de canaux, de manière étanche, afin d'être installé dans une tubulure ou un système de filtration. Le traitement thermique employé pour fixer la plaque perforée au support filtre doit être effectué à une température inférieure à la température de décomposition de la membrane composite.

Si le filtre présente des canaux alternativement bouchés afin d'obtenir un filtre membrane fonctionnant selon les principes de la filtration frontale et si le bouchage est effectué postérieurement au dépôt de la membrane au moins pour une face du filtre, soit du côté des canaux d'entrée soit du côté de sortie, le bouchage peut être réalisé avec une barbotine de SiC, les bouchons étant frittés à une température inférieure à la température de décomposition de la membrane composite, préférentiellement en même temps que la membrane.

Les figures associées aux exemples qui suivent sont fournis afin d'illustrer l'invention et ses avantages, sans bien entendu que les modes de réalisations ainsi décrits puissent être considérés comme limitatifs de la présente invention.

Dans les figures ci-jointes :

- La figure 1 illustre une configuration classique d'un filtre tubulaire selon la technique actuelle, selon un plan de coupe transversal P.
- La figure 2 est un cliché de microscopie d'un filtre montrant la couche de séparation membranaire au sens de la présente invention.

La figure 1 illustre un filtre tangentiel 1 selon la technique actuelle et conforme à la présente invention, tel qu'utilisé pour la filtration d'un fluide tel qu'un liquide. La figure 1 représente une vue schématique du plan de coupe transversal P. Le filtre comprend ou le plus souvent est constitué par un élément support 1 fait dans un matériau inorganique poreux de préférence non oxyde. L'élément présente classiquement une forme tubulaire d'axe central longitudinal A, délimitée par une surface externe 2. Il comprend dans sa portion interne 3 un ensemble de canaux 4 adjacents, d'axes parallèles entre eux et séparés les uns des autres par des parois 8. Les parois sont constituées dans un matériau inorganique poreux laissant passer le filtrat depuis la partie interne 3 vers la surface externe 2. Les canaux 4 sont recouverts sur leur surface interne d'une couche séparatrice membranaire 5 déposée sur un intermédiaire d'accrochage, tel qu'illustré par le cliché de microscopie électronique reporté sur la figure 2. Cette couche séparatrice membranaire 5 (ou membrane) entre en contact avec ledit fluide circulant dans lesdits canaux et en permet la filtration.

Sur la figure 2 on a reporté un cliché de microscopie électronique pratiqué sur un canal 4 de la figure 1. On observe sur cette figure le support poreux 100 de forte porosité, une première couche intermédiaire 101, une deuxième couche intermédiaire 102 permettant l'accrochage de la couche séparatrice membranaire 103 de plus fine porosité.

Selon une autre configuration non représentée d'un autre filtre selon l'invention, celui-ci est configuré pour que le fluide à traiter traverse initialement la paroi externe, le perméat étant recueilli par un moyen de réception. Selon une telle configuration, la couche membranaire filtrante est avantageusement déposée sur la surface externe du filtre et en recouvre au moins une partie.

Une telle configuration est souvent appelée FSM (pour Flat Sheet Membrane). On pourra se référer à la publication disponible sur le site web :

http://www.liqtech.com/img/user/file/FSM Sheet F 4 260214V2 . pdf.

Les exemples qui suivent sont fournis à titre uniquement illustratifs. Ils ne sont pas limitatifs et permettent de mieux comprendre les avantages techniques liés à la mise en oeuvre de la présente invention.

Les supports selon tous les exemples sont identiques et sont obtenus selon le même protocole expérimental qui suit. On mélange dans un malaxeur :

- 3000 g d'un mélange des deux poudres de particules de carbure de silicium de pureté supérieure à 98% dans les proportions suivantes : 75% en masse d'une première poudre de particules présentant un diamètre médian de l'ordre de 60 micromètres et 25% en masse d'une deuxième poudre de particules présentant un diamètre médian de l'ordre de 2 micromètres. (Au sens de la présente description, le diamètre médian $d_{50}$ désigne le diamètre des particules au-dessous duquel se trouve 50% en masse de la population desdites particules).
- 300 g d'un liant organique du type dérivé de cellulose.

On ajoute de l'eau environ 20% en masse par rapport à la masse totale de SiC et d'additif organique et on malaxe jusqu'à obtenir une pâte homogène dont la plasticité permet l'extrusion d'une structure de forme tubulaire, la filière étant configurée pour l'obtention de blocs monolithes dont les canaux et les parois externes présentent une structure selon la configuration recherchée et telle que représentée sur la figure 1 ci-jointe.

Plus précisément, les monolithes cuits présentent des canaux ronds de diamètre hydraulique 2mm, les canaux périphériques en demi-lune représentés sur les figures présentant un diamètre hydraulique de 1,25mm. L'épaisseur moyenne de la paroi externe est 1,1 mm et l'OFA (Open Front Area) de la face d'entrée du filtre est de 37%. L'OFA (« open front area » en anglais) ou surface de front ouverte, est obtenue en calculant le rapport en pourcentage de l'aire couverte par la somme des sections transversales des canaux sur l'aire totale de la section transversale correspondante du support poreux.

On synthétise ainsi pour chaque configuration 5 à 10 supports crus de 25 mm de diamètre et 30 cm de longueur.

Les monolithes crus ainsi obtenus sont séchés par micro-onde pendant un temps suffisant pour amener la teneur en eau non liée chimiquement à moins de 1% en masse.

Les monolithes sont ensuite cuits jusqu'à une température d'au moins 2100°C qui est maintenue pendant 5 heures. Le matériau obtenu présente une porosité ouverte de 43% et un diamètre moyen de distribution de pores de l'ordre de 25 micromètres, tel que mesuré par porosimétrie mercure. Les grains présentent une taille médiane d'environ 20 micromètres.

### Exemple 1 (comparatif selon WO2016097661A1):

Selon cet exemple, une couche séparatrice membranaire en carbure de silicium est ensuite déposée sur la paroi interne des canaux d'une structure support telle qu'obtenue précédemment, selon le procédé décrit ci-après :
Une couche intermédiaire d'accrochage de la couche séparatrice est constituée dans un premier temps, à partir d'une barbotine dont la formulation minérale comporte 30% en masse d'une poudre de grains de SiC (SIKA DPF-C) dont le diamètre médian $D_{50}$ est d'environ 11 micromètres, 20% en masse d'une poudre de grains de SiC (SIKA FCP-07) dont le diamètre médian $D_{50}$ est d'environ 2,5 micromètres, et 50% d'eau déionisée.

Une barbotine du matériau constituant la couche de filtration membranaire est également préparée, dont la formulation comporte 40% en masse de grains de SiC ($d_{50}$ autour de 0,6 micromètre) et 60% d'eau déionisée.
La rhéologie des barbotines a été réglée par ajout des additifs organiques à 0,5-0,7 Pa.s sous un gradient de cisaillement de 1s$^{-1}$, mesurée à 22°C selon la norme DINC33-53019.

Ces deux couches sont déposées successivement selon le même procédé décrit ci-après : la barbotine est introduite dans un réservoir sous agitation (20 tour/min). Après une phase de désaérage sous vide léger (typiquement 25 millibars) tout en conservant l'agitation, le réservoir est mis en surpression d'environ 0,7 bar afin de pouvoir enduire l'intérieur du support à partir de sa partie basse jusqu'à son extrémité supérieure. Cette opération ne prend que quelques secondes pour un support de 30 cm de longueur. Immédiatement après enduction de la barbotine sur la paroi interne des canaux du support, l'excès est évacué par gravité.

Les supports sont ensuite séchés à température ambiante pendant 10 minutes puis à 60°C pendant 12h. Les supports ainsi séchés sont ensuite cuits sous Azote à une température de 1600°C pendant 2h à la pression ambiante.

Une coupe transversale est réalisée sur les filtres ainsi obtenus. La structure de la membrane est observée et étudiée au microscope électronique à balayage selon les méthodes décrites par la suite.

### Exemple 2(comparatif):

Selon cet exemple, on procède de façon identique à l'exemple 1 mais la cuisson des supports revêtus est réalisée à 1600°C sous Argon, l'intervalle de temps étant de 30 minutes entre 1400 et 1600°C.

### Exemple 3(comparatif):

Selon cet exemple, on procède de façon identique à l'exemple 1 mais la cuisson des supports revêtus est réalisée à 1550°C sous Argon, l'intervalle de temps étant de 30 minutes entre 1400 et 1550°C.

### Exemple 4(selon l'invention):

Selon cet exemple, on procède de façon identique à l'exemple 3 précédent mais les supports revêtus sont cuits sous Argon à 1650°C au lieu de 1550°C l'intervalle de temps étant de 30 minutes entre 1400 et 1650°C. Une troisième couche qui devient la couche séparatrice est ensuite déposée. Cette couche est obtenue par dépôt d'une barbotine dont la formulation correspond à 7% en masse d'une poudre de grains de SiC vert dont le diamètre médian $D_{50}$ est d'environ 0,18 micromètres correspondant à une surface spécifique de 50 $m^2/g$ et le complément étant de deionisée. En particulier pour la barbotine de cette couche séparatrice, le PH est réglé entre 9 et 10 par ajout de soude. Afin d'épaissir la barbotine, de contrôler la sédimentation et d'obtenir un effet filmogène pour un bon aspect de surface après séchage, 0,01 à 0,03 de tylose MH4000P2 est ajoutée par rapport à la quantité d'eau. Une épaisseur moyenne de 7 micromètres est déposée par contrôle de la masse de la barbotine fixée sur le substrat.

Les supports ainsi revêtus sont cuits de nouveau jusqu'à 1550°C sous Argon à la pression ambiante, l'intervalle de temps étant de 30 minutes entre 1400 et 1550°C.

### Exemple 5 (selon l'invention):

Selon cet exemple, on procède de façon identique à l'exemple 3 mais :

- la couche séparatrice de grains dont le diamètre médian $D_{50}$ de grains d'environ 0,18 micromètres est déposée directement sur une seule couche intermédiaire d'accrochage constituée à partir d'une barbotine dont la formulation minérale comporte 18% en masse d'une poudre de grains de SiC (SIKA DPF-C) dont le diamètre médian $D_{50}$ est d'environ 11 micromètres, 9% en masse d'une poudre de grains de SiC (SIKA 1500F) dont le diamètre médian $D_{50}$ est d'environ 2 micromètres, 3% en masse d'une poudre de grains de SiC dont le diamètre médian $D_{50}$ est d'environ 0,18 micromètres le complément étant de 70% d'eau deionisée, et
- la couche séparatrice est obtenue par dépôt d'une barbotine dont la formulation présente 7% en masse d'une poudre de grains de SiC vert dont le diamètre médian $D_{50}$ est d'environ 0,18 micromètres préparée comme dans l'exemple 4. Une épaisseur moyenne de 7 micromètres est déposée par contrôle de la masse de la barbotine fixée sur le substrat.

Les supports ainsi revêtus sont cuits de nouveau à la pression ambiante à 1550°C sous Argon, l'intervalle de temps étant de 30 minutes entre 1400 et 1550°C.

### Exemple 6 (comparatif):

A la différence de l'exemple précédent, la couche intermédiaire est constituée à partir d'une barbotine dont la formulation minérale comporte 30% en masse d'une poudre de grains de SiC (SIKA DPF-C) dont le diamètre médian $D_{50}$ est d'environ 11 micromètres, 20% en masse d'une poudre de grains de SiC (SIKA FCP-07) dont le diamètre médian $D_{50}$ est d'environ 2,5 micromètres, et 50% d'eau distillée.
Une couche séparatrice identique à celle de l'exemple précédent est déposée sur la couche intermédiaire par contrôle de la masse de la barbotine fixée sur le substrat.

### Exemple 7 (comparatif):

A la différence de l'exemple n°3, la cuisson finale des supports ainsi revêtus est opérée cette fois à la température de 1100°C pendant 2 heures sous azote pur.

Cet exemple apparaît donc conforme à l'enseignement de la demande publiée sous FR2587026A1 pour la réalisation d'un filtre à membrane en SiC.

### Exemple 8 (comparatif):

A la différence de l'exemple précédent, la cuisson finale des supports revêtus est opérée cette fois à la température de 1700°C pendant 2 heures sous argon selon l'enseignement de EP2559470A1 pour la réalisation d'une membrane en SiC.

**Exemple 9 (comparatif):**

A la différence de l'exemple n°6, la couche séparatrice est obtenue à partir d'une barbotine dont la composition minérale est la suivante : 20% en masse de grains de la poudre d'alpha-SiC dont le diamètre médian $d_{50}$ est de l'ordre de 0,6 micromètre, 53% en masse de la poudre de grains de silicium métallique dont le diamètre médian $d_{50}$ est d'environ 4 micromètres, 27% de la poudre de carbone amorphe dont le diamètre médian D50 est d'environ 1 micromètres.

Les supports séchés comme précédemment décrit sont finalement cuits sous Argon à une température de 1470°C pendant 4h à la pression ambiante.

Les caractéristiques et les propriétés des filtres ainsi obtenus sont mesurées comme suit :

Pour chaque exemple, un échantillon de membrane sur son support est placé dans un microscope électronique à balayage équipé d'une sonde ionique focalisée (« FIB » ou « focused ion beam » en anglais). Des tranchées sont réalisées dans l'épaisseur de la couche membranaire selon des plans parallèles permettant l'observation de différents plans de coupe pour représenter une section transversale de la couche membranaire. Afin d'obtenir une très bonne résolution entre les parois céramiques et la porosité de la membrane sur toute son épaisseur, un cliché d'au moins un million de pixels est réalisé à l'aide du microscope électronique selon un mode utilisant les électrons secondaires (mode SE). Le grandissement utilisé est tel que la largeur de l'image est comprise entre dix et cent fois la taille moyenne des particules de la couche séparatrice membranaire environ 50 fois selon les exemples. Sur la base de ces clichés, une segmentation est effectuée à l'aide d'un logiciel ImageJ afin de différentier la porosité des grains, en faisant attention à la profondeur de champ. Pour chaque cliché, est déterminée la proportion surfacique de porosité de la couche membranaire. La moyenne des proportions des clichés pris eux-mêmes selon dans différents plans au sein de la membrane est une valeur représentative du volume de porosité de cette membrane.

A l'aide du logiciel iMorph © a été déterminée la tortuosité des exemples 3 à 6.

Les résultats sont reportés dans le tableau 1 tout comme les propriétés suivantes pour lesquelles les protocoles expérimentaux suivis sont décrits ci-après:

a) Une mesure de flux ou de débit spécifique (débit d'eau relatif) est réalisée sur les filtres selon la méthode suivante : A une température de 25°C un fluide constitué d'eau déminéralisée chargée à $5.10^{-3}$ mol/l de KCl alimente les filtres à évaluer sous une pression transmembranaire de 0,5 bars et une vitesse de circulation dans les canaux de 2 m/s. Le perméat (l'eau) est récupéré à la périphérie du filtre. La mesure du débit caractéristique du filtre est exprimée en L/min par surface de filtration en $m^2$ après 20h de filtration. Dans le tableau les résultats de débit ont été exprimés par référence aux données enregistrées pour l'exemple 3 comparatif. Plus précisément, une valeur supérieure à 100% indique un débit augmenté par rapport à la référence (exemple 3) et donc une amélioration de la capacité de filtration.

b) La mesure de la résistance à l'abrasion est effectuée en soumettant un filtre réalisé selon les exemples précédents une barbotine comprenant 2 g/litre d'une poudre de SiC de diamètre médian 250 micromètres passant dans les canaux du filtre selon une vitesse de 2m/seconde. La perte de perméabilité (standard à fournir) est mesurée après 20 heures de test. L'exemple 3 est considéré comme référence (100) . Une valeur plus faible que 100, par exemple de 80 signifie une perte relative de perméabilité plus faible de 20% par rapport à la référence et donc une meilleure résistance à l'abrasion.

c) Le test de résistance au rétro-lavage intensif consiste à soumettre le filtre à 1000 impulsions d'eau sous une pression de 3 bars / seconde à chaque minute de telle sorte que le liquide traverse les parois poreuses à contre-courant. On mesure l'augmentation de perméabilité qui peut résulter de dégradation de la membrane. L'exemple 3 est pris comme référence (100). Une valeur plus faible que 100, par exemple de 80, signifie une perte relative de perméabilité plus faible de 20% par rapport à la référence (et donc une meilleure résistance aux sollicitations mécaniques induites par le retro-lavage) .

d) Test de turbidité :

On procède selon la méthode suivante : On utilise de l'eau sale synthétique comprenant de l'argile, du sel, de l'huile et des tensioactifs selon respectivement des teneurs égales à 100ppm, 4000ppm, 300ppm et 2ppm. L'eau sale alimente, à une température constante de 25°C, les filtres à évaluer sous une pression transmembranaire de 0,5 bars et une vitesse de circulation dans les canaux de 3 m/s. Le filtrat (l'eau purifiée) est récupéré à la périphérie du filtre. Afin d'estimer la performance de filtration du filtre, on mesure la turbidité du filtrat en continu au moyen d'un turbidimètre de type Beam-Turbidy Meter Serie LAT N1 fourni par Kobold Instrumentation, au bout de 10 cycles de filtration. L'exemple 3 est considéré comme référence (100). Une valeur plus élevée après le test de la turbidité correspond donc à une moins bonne qualité de filtration du liquide.

Les caractéristiques et les propriétés des filtres et de la couche séparatrice membranaire (désignée dans le tableau ci-dessous par membrane) obtenus selon les exemples 1 à 9 sont données dans le tableau 1 ci-après :

[Tableau 1]

| | Exemple 1 (comp.) | Exemple 2 (comp.) | Exemple 3 (comp.) | Exemple 4 (invention) | Exemple 5 (invention) | Exemple 6 (comp.) |
|---|---|---|---|---|---|---|
| Couche intermédiaire n°1($d_{50}$ poudres) | DPF-C (11$\mu$m) FCP07 (2,5$\mu$m ) | DPF-C (11$\mu$m) FCP07 (2,5$\mu$m ) | DPF-C (11$\mu$m) FCP07 (2,5$\mu$m ) | DPF-C (11$\mu$m) FCP07 (2,5$\mu$m ) | DPF-C (11 $\mu$m) 1500F(2 $\mu$m) SiC (0,18 $\mu$m) | DPF-C (11$\mu$m) FCP07(2,5$\mu$m) |
| Couche intermédiaire n°2($d_{50}$ poudre) | non | non | non | SiC (0,6$\mu$m) | non | non |
| Cuisson intermédiaire (1650°C/Ar) | non | non | non | oui | non | non |
| Couche séparatrice ($d_{50}$ poudre) | SiC (0,6$\mu$m) | SiC (0,6$\mu$m) | SiC (0,6$\mu$m) | SiC (0,18$\mu$m) | SiC (0,18$\mu$m) | SiC (0,18$\mu$m) |
| $T_{max}$ cuisson de la couche séparatrice | 1600°C/Ar | 1600°C/Ar | 1550°C/Ar | 1550°C/Ar | 1550°C/Ar | 1550°C/Ar |
| Caractéristiques du filtre membrane final après cuissons | | | | | | |
| Teneur massique en SiC de la membrane (%) | 99,3 | >99,0 | >99,0 | >99,0 | >99,0 | >99,0 |
| Epaisseur moyenne cumulée des couche séparatrice et intermédiaires (micromètres) | 86 | 83 | 85 | 95 | 52 | 51 |
| Couche intermédiaire après cuisson | | | | | | |
| Diamètre médian de pores (nm) | 1500 | 1000 | 1000 | 2000 | 900 | 2000 |
| Volume de pores (%) | 42 | 42 | 40 | 45 | 42 | 45 |
| Taille médiane de grains (micromètres) | 10 | 10 | 10 | 10 | 5 | 10 |
| Couche séparatrice membranaire après cuisson | | | | | | |
| Epaisseur moyenne (micromètres) | 45 | 35 | 35 | 7 | 7 | 2 |
| Diamètre médian de pores (nm) | 250 | 413 | 249 | 236 | 242 | 550 |
| Volume de pores(%) | 40 | 40 | 31 | 45 | 44 | 52 |
| Indice de tortuosité | non mesuré | non mesuré | 1,8 | 1,4 | 1,4 | 1,2 |
| Taille médiane de grains (nm ou nanomètres) | 605 | 620 | 600 | 185 | 188 | 223 |
| Propriétés du filtre membrane | | | | | | |
| Indice de débit spécifique | 95 | 150 | Réf.=100 | 150 | 140 | 148 |

EP 3 999 217 B1

(suite)

| Propriétés du filtre membrane | | | | | | |
|---|---|---|---|---|---|---|
| Indice de résistance à l'abrasion | 98 | 50 | Réf.=100 | 36 | 35 | 34 |
| Indice de résistance après 1000 retro-lavages (impulsion 3bars/sec) | 87 | 45 | Réf.=100 | 25 | 26 | 88 |
| Indice de turbidité | Similaire à la Reference | Un peu plus élevée que la référence | Reference | Similaire à la Reference | Similaire à la Reference | Trop élevée par rapport à la référence |

[Tableau 1 suite]

| | Exemple 7 (comp.) | Exemple 8 (comp.) | Exemple 9 (comp.) |
|---|---|---|---|
| Couche intermédiaire n°1($d_{50}$ poudres) | DPF-C($11\mu m$) FCP07 ($2,5\mu m$) | DPF-C($11\mu m$) FCP07($2,5\mu m$) | DPF-C($11\mu m$) FCP07 ($2,5\mu m$) |
| Couche intermédiaire n°2($d_{50}$ poudre) | non | non | non |
| Cuisson intermédiaire (1650°C/Ar) | non | non | |
| Couche séparatrice ($d_{50}$ poudre) | SiC ($0,6\mu m$) | SiC ($0,6\mu m$) | SiC ($0,6\mu m$) Si ($4\ \mu m$) C ($1\mu m$) |
| Tmax cuisson de la couche séparatrice | 1100°C/2h/$N_2$ | 1700°C/2h/Ar | 1470°C/4h/Ar |
| Caractéristiques du filtre membrane final après cuissons | | | |
| Teneur massique en SiC de la membrane (%) | >98,5 | >99,0 | >99,0 |
| Epaisseur moyenne cumulée des couche séparatrice et intermédiaire(s) (micromètres) | 85 | 81 | 80 |
| Couche intermédiaire après cuisson | | | |
| Diamètre médian de pores (nm) | 900 | 1650 | 1000 |
| Volume de pores (nm) | 39 | 44 | 42 |
| Taille médiane de grains (micromètres) | 10 | 11 | 10 |
| Couche séparatrice membranaire après cuisson | | | |
| Epaisseur moyenne (micromètres) | 45 | 25 | 30 |
| Diamètre médian de pores (%) | 200 | 800 | 220 |
| Volume de pores(%) | 31 | 45 | 40 |
| Indice de tortuosité | 1,9 | 1,2 | >1,9 |
| Taille médiane de grains (nm ou nanomètres) | 600 | 620 | 350 |
| Propriétés du filtre membrane | | | |
| Indice de débit spécifique | 85 | 250 | 105 |
| Indice de résistance à l'abrasion | 125 | 29 | 98 |
| Indice de résistance après 1000 retro-lavages (impulsion 3bars/sec) | 112 | 10 | 120 |

15

(suite)

| Propriétés du filtre membrane | | | |
|---|---|---|---|
| Indice de turbidité | Similaire à la Reference | Trop élevée par rapport à la référence | Similaire à la Reference |

Les résultats regroupés dans le tableau 1 qui précèdent indiquent que les exemples 4 et 5 selon l'invention présentent les meilleures performances combinées aux différents tests et mesures pratiquées. Les filtres membranes de ces exemples ont en particulier une bien meilleure résistance au retro-lavage tout en présentant une résistance à l'abrasion et un débit spécifique très élevés sans dégradation de leur sélectivité.

Au final, les résultats regroupés dans le tableau indiquent que le matériau utilisé selon l'invention pour fabriquer la couche séparatrice membranaire ne peut être obtenu que suivant certaines conditions de procédé, non encore décrites dans l'art antérieur.

## Revendications

1. Filtre pour la filtration d'un fluide tel qu'un liquide, comprenant ou constitué par un élément support fait dans un matériau céramique poreux, au moins une portion de la surface dudit élément support étant recouverte d'une couche séparatrice membranaire, ledit filtre étant **caractérisé en ce que** :

   - ladite couche séparatrice membranaire est constituée essentiellement de carbure de silicium (SiC),
   - la porosité de la couche séparatrice membranaire est comprise entre 10 et 70% en volume,
   - le diamètre médian de pores dans la couche séparatrice membranaire est compris entre 50 nanomètres et 500 nanomètres,
   - l'épaisseur moyenne de la couche séparatrice membranaire est comprise entre 1 micromètre et 30 micromètres,
   - la tortuosité de la couche séparatrice membranaire est inférieure à 1,7, de préférence est inférieure à 1,5,

   la porosité, le diamètre médian des pores, l'épaisseur moyenne de la couche séparatrice membranaire et la tortuosité étant mesurés tel que décrit dans la description.

2. Filtre selon la revendication précédente, dans lequel la taille médiane des grains constituant la couche séparatrice membranaire, mesurée tel que décrit dans la description, est inférieure à 400 nm et supérieure à 80 nm.

3. Filtre selon la revendication précédente, dans lequel la taille médiane des grains constituant la couche séparatrice membranaire est inférieure à 300 nm, et de manière très préférée est inférieure à 250 nm.

4. Filtre selon l'une des revendications précédentes dans lequel l'épaisseur moyenne de la couche séparatrice est comprise entre 4 et 15 micromètres, de préférence est comprise entre 5 et 10 micromètres.

5. Filtre selon l'une des revendications précédentes dans lequel le diamètre médian de pores dans la couche séparatrice est compris entre 100 et 300 nm.

6. Filtre selon l'une des revendications précédentes, dans lequel le SiC représente plus de 95% et de préférence plus de 99% de la masse du matériau constituant la couche séparatrice membranaire.

7. Filtre selon l'une des revendications précédentes comprenant en outre une ou plusieurs couches intermédiaires disposées entre le matériau constituant l'élément support et le matériau constituant la couche séparatrice membranaire.

8. Filtre selon l'une des revendications précédentes dans lequel la ou les couches intermédiaires sont essentiellement constituées de SiC.

9. Filtre selon l'une des revendications précédentes dans lequel au moins une couche intermédiaire présente un diamètre médian de pores au moins deux supérieur à celui de la couche séparatrice membranaire.

10. Filtre selon l'une des revendications précédentes dans lequel la ou les couches intermédiaires présente(nt) une épaisseur moyenne comprise entre 5 et 100 micromètres, de préférence comprise entre 30 et 60 micromètres.

**11.** Filtre selon l'une des revendications précédentes dans lequel ledit élément support se présente sous la forme d'une plaque, d'un disque, d'un tube ou d'un parallélépipède.

**12.** Filtre selon l'une des revendications précédentes dans lequel l'élément support poreux comprend ou est constitué par un matériau choisi parmi le carbure de silicium, SiC, en particulier le SiC fritté en phase liquide ou en phase solide, le SiC recristallisé, le nitrure de Silicium, en particulier $Si_3N_4$, l'oxynitrure de Silicium, en particulier $Si_2ON_2$, l'oxynitrure de Silicium et d'Aluminium, ou une combinaison de ceux-ci.

**13.** Filtre selon l'une des revendications précédentes dans lequel la porosité ouverte du matériau constituant l'élément support est comprise entre 20 et 70%, le diamètre médian de pores du matériau constituant le l'élément support poreux étant de préférence compris entre 5 et 50 micromètres.

**14.** Filtre selon l'une des revendications précédentes dans lequel la tortuosité de l'élément support est supérieure à 1 et/ou inférieure à 1,7.

**15.** Procédé de fabrication d'un filtre selon l'une des revendications précédentes, comprenant les étapes suivantes :

- préparation d'une barbotine à partir d'une poudre de particules de carbure de silicium de taille moyenne comprise entre 0,05 et 0,4 micromètres, de préférence entre 0,1 et 0,3 micromètres,
- application de ladite barbotine sur un élément support, dans des conditions permettant la formation d'une couche de la barbotine sur au moins une partie de la surface externe dudit support,
- séchage puis cuisson sous une atmosphère non oxydante, de préférence neutre, en particulier sous Argon, à une température comprise entre 1400°C et 1600°C, et dans cet intervalle de température pendant un temps suffisant pour l'obtention de la couche séparatrice membranaire, par exemple entre 10 et 120 minutes, de préférence 15 et 45 minutes, ladite couche étant constituée essentiellement carbure de silicium.

**16.** Procédé de fabrication d'un filtre selon l'une des revendications précédentes, comprenant en outre, avant l'étape de dépôt de ladite barbotine, une étape de dépôt d'au moins une couche intermédiaire à partir d'une barbotine comprenant une poudre de particules de carbure de silicium dont au moins une fraction des grains présente un diamètre médian inférieure à 1 micromètre et supérieur à 0,1 micromètre.

**17.** Utilisation d'un filtre selon l'une des revendications 1 à 14 pour la filtration de liquides, en particulier d'un liquide aqueux ou d'un liquide alcoolique en particulier du vin, de la bière ou un spiritueux.

## Patentansprüche

**1.** Filter für die Filtration eines Fluids wie einer Flüssigkeit, umfassend oder gebildet aus einem Stützelement, das aus einem porösen keramischen Material gefertigt ist, wobei mindestens ein Abschnitt der Oberfläche des Stützelements mit einer membranartigen Trennschicht überzogen ist, wobei der Filter **dadurch gekennzeichnet ist, dass:**

- die membranartige Trennschicht im Wesentlichen aus Siliciumcarbid (SiC) gebildet ist,
- die Porosität der membranartigen Trennschicht zwischen 10 und 70 Vol.-% liegt,
- der mittlere Porendurchmesser in der membranartigen Trennschicht zwischen 50 Nanometer und 500 Nanometer liegt,
- die durchschnittliche Dicke der membranartigen Trennschicht zwischen 1 Mikrometer und 30 Mikrometer liegt,
- die Tortuosität der membranartigen Trennschicht weniger als 1,7, vorzugsweise weniger als 1,5 beträgt, wobei die Porosität, der mittlere Porendurchmesser, die durchschnittliche Dicke der membranartigen Trennschicht und die Tortuosität wie in der Beschreibung beschrieben gemessen werden.

**2.** Filter nach dem vorstehenden Anspruch, wobei die mittlere Größe von Körnern, die die membranartige Trennschicht bilden, gemessen wie in der Beschreibung beschrieben, weniger als 400 nm und mehr als 80 nm beträgt.

**3.** Filter nach dem vorstehenden Anspruch, wobei die mittlere Größe von Körnern, die die membranartige Trennschicht bilden, weniger als 300 nm und besonders bevorzugt weniger als 250 nm beträgt.

4. Filter nach einem der vorstehenden Ansprüche, wobei die durchschnittliche Dicke der Trennschicht zwischen 4 und 15 Mikrometer liegt, vorzugsweise zwischen 5 und 10 Mikrometern liegt.

5. Filter nach einem der vorstehenden Ansprüche, wobei der mittlere Porendurchmesser in der Trennschicht zwischen 100 und 300 nm liegt.

6. Filter nach einem der vorstehenden Ansprüche, wobei das SiC mehr als 95 % und vorzugsweise mehr als 99 % der Masse des Materials ist, das die membranartige Trennschicht bildet.

7. Filter nach einem der vorstehenden Ansprüche, ferner umfassend eine oder mehrere Zwischenschichten, die zwischen dem Material, das das Stützelement bildet, und dem Material, das die membranartige Trennschicht bildet, angeordnet sind.

8. Filter nach einem der vorstehenden Ansprüche, wobei die Zwischenschicht(en) im Wesentlichen aus SiC gebildet ist (sind).

9. Filter nach einem der vorstehenden Ansprüche, wobei mindestens eine Zwischenschicht einen mittleren Porendurchmesser aufweist, der mindestens zweimal größer als der der membranartigen Trennschicht ist.

10. Filter nach einem der vorstehenden Ansprüche, wobei die Zwischenschicht(en) eine durchschnittliche Dicke, die zwischen 5 und 100 Mikrometer liegt, vorzugsweise zwischen 30 und 60 Mikrometern liegt, aufweist (aufweisen).

11. Filter nach einem der vorstehenden Ansprüche, wobei das Stützelement die Form einer Platte, einer Scheibe, eines Rohrs oder eines Parallelepipeds aufweist.

12. Filter nach einem der vorstehenden Ansprüche, wobei das poröse Stützelement ein Material umfasst oder aus diesem gebildet ist, das aus Siliciumcarbid, SiC, insbesondere dem gesinterten SiC in flüssiger Phase oder in fester Phase, dem umkristallisierten SiC, dem Siliciumnitrid, insbesondere $Si_3N_4$, dem Siliciumoxynitrid, insbesondere $Si_2ON_2$, dem Aluminium- und Siliciumoxynitrid oder einer Kombination aus diesen ausgewählt ist.

13. Filter nach einem der vorstehenden Ansprüche, wobei die offene Porosität des Materials, aus dem das Stützelement gebildet ist, zwischen 20 und 70 % liegt, der mittlere Porendurchmesser des Materials, aus dem das poröse Stützelement gebildet ist, vorzugsweise zwischen 5 und 50 Mikrometer liegt.

14. Filter nach einem der vorstehenden Ansprüche, wobei die Tortuosität des Stützelements größer als 1 und/oder kleiner als 1,7 ist.

15. Verfahren zum Herstellen eines Filters nach einem der vorstehenden Ansprüche, umfassend die folgenden Schritte:

- Erzeugen eines Schlickers aus einem Pulver von Siliciumcarbidpartikeln, deren durchschnittliche Größe zwischen 0,05 und 0,4 Mikrometer, vorzugsweise zwischen 0,1 und 0,3 Mikrometer liegt,
- Aufbringen des Schlickers auf ein Stützelement, unter Bedingungen, die die Ausbildung einer Schicht des Schlickers auf mindestens einem Teil der Außenoberfläche des Stützelements ermöglichen,
- Trocknen und anschließendes Brennen in einer nicht oxidierenden, vorzugsweise neutralen Atmosphäre, insbesondere unter Argon, bei einer Temperatur, die zwischen 1400 °C und 1600 °C liegt, und in diesem Temperaturbereich eine ausreichende Zeit lang zum Gewinnen der membranartigen Trennschicht, zum Beispiel zwischen 10 und 120 Minuten, vorzugsweise 15 und 45 Minuten, wobei die Schicht im Wesentlichen aus Siliciumcarbid gebildet wird.

16. Verfahren zum Herstellen eines Filters nach einem der vorstehenden Ansprüche, ferner umfassend vor dem Schritt eines Ablagerns des Schlickers einen Schritt des Ablagerns mindestens einer Zwischenschicht aus einem Schlicker, umfassend ein Pulver von Siliciumcarbidpartikeln, von denen mindestens ein Anteil von Körnern einen mittleren Durchmesser von weniger als 1 Mikrometer und mehr als 0,1 Mikrometer aufweist.

17. Verwendung eines Filters nach einem der Ansprüche 1 bis 14 für die Filtration von Flüssigkeiten, insbesondere einer wässrigen Flüssigkeit oder einer alkoholischen Flüssigkeit, insbesondere Wein, Bier oder einer Spirituose.

**Claims**

1. A filter for the filtration of a fluid, such as a liquid, comprising or constituted by a support element made from a porous ceramic material, at least a portion of the surface of said support element being covered with a membrane separating layer, said filter being **characterized in that**:

   - said membrane separating layer is constituted essentially of silicon carbide (SiC),
   - the porosity of the membrane separating layer is between 10% and 70% by volume,
   - the median pore diameter in the membrane separating layer is between 50 nanometers and 500 nanometers,
   - the mean thickness of the membrane separating layer is between 1 micrometer and 30 micrometers,
   - the tortuosity of the membrane separating layer is less than 1.7, preferably is less than 1.5,

   the porosity, the median pore diameter, the mean thickness of the membrane separating layer and the tortuosity being measured as described in the description.

2. The filter as claimed in the preceding claim, in which the median size of the grains constituting the membrane separating layer, measured as described in the description, is less than 400 nm and greater than 80 nm.

3. The filter as claimed in the preceding claim, in which the median size of the grains constituting the membrane separating layer is less than 300 nm and very preferably is less than 250 nm.

4. The filter as claimed in one of the preceding claims, in which the mean thickness of the separating layer is between 4 and 15 micrometers, preferably is between 5 and 10 micrometers.

5. The filter as claimed in one of the preceding claims, in which the median pore diameter in the separating layer is between 100 and 300 nm.

6. The filter as claimed in one of the preceding claims, in which the SiC represents more than 95% and preferably more than 99% of the weight of the material constituting the membrane separating layer.

7. The filter as claimed in one of the preceding claims, additionally comprising one or more intermediate layers positioned between the material constituting the support element and the material constituting the membrane separating layer.

8. The filter as claimed in one of the preceding claims, in which the intermediate layer or layers are essentially constituted of SiC.

9. The filter as claimed in one of the preceding claims, in which at least one intermediate layer exhibits a median pore diameter at least two times greater than that of the membrane separating layer.

10. The filter as claimed in one of the preceding claims, in which the intermediate layer or layers exhibit(s) a mean thickness of between 5 and 100 micrometers, preferably of between 30 and 60 micrometers.

11. The filter as claimed in one of the preceding claims, in which said support element is provided in the form of a plate, of a disk, of a tube or of a parallelepiped.

12. The filter as claimed in one of the preceding claims, in which the porous support element comprises or is constituted by a material chosen from silicon carbide, SiC, in particular liquid-phase or solid-phase sintered SiC, recrystallized SiC, silicon nitride, in particular $Si_3N_4$, silicon oxynitride, in particular $Si_2ON_2$, silicon aluminum oxynitride, or a combination thereof.

13. The filter as claimed in one of the preceding claims, in which the open porosity of the material constituting the support element is between 20% and 70%, the median pore diameter of the material constituting the porous support element preferably being between 5 and 50 micrometers.

14. The filter as claimed in one of the preceding claims, in which the tortuosity of the support element is greater than 1 and/or less than 1.7.

15. A process for the manufacture of a filter as claimed in one of the preceding claims, comprising the following stages:

- preparation of a slip starting from a powder of silicon carbide particles with a mean size of between 0.05 and 0.4 micrometers, preferably between 0.1 and 0.3 micrometers,
- application of said slip to a support element, under conditions making possible the formation of a layer of the slip on at least a part of the external surface of said support,
- drying then firing under a nonoxidizing, preferably neutral, atmosphere, in particular under argon, at a temperature of between 1400°C and 1600°C, and in this temperature range for a time sufficient to obtain the membrane separating layer, for example between 10 and 120 minutes, preferably 15 and 45 minutes, said layer being constituted essentially of silicon carbide.

16. The process for the manufacture of a filter as claimed in one of the preceding claims, additionally comprising, before the stage of deposition of said slip, a stage of deposition of at least one intermediate layer starting from a slip comprising a powder of silicon carbide particles, at least a fraction of the grains of which exhibits a median diameter of less than 1 micrometer and greater than 0.1 micrometer.

17. The use of a filter as claimed in one of claims 1 to 14 for the filtration of liquids, in particular of an aqueous liquid or of an alcoholic liquid, in particular wine, beer or a spirit.

[Figure 1]

[Figure 2]

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- WO 2009039861 A1
- EP 2543420 A1
- DE 202010015318 U1
- EP 2910299 A1
- WO 2016097661 A1
- WO 2005005016 A1
- US 7699903 B2
- FR 2549736
- EP 3009182 A1
- FR 3052682
- FR 2587026
- US 2018169588 A
- US 2016121272 A
- EP 2559470 A
- FR 2587026 A1
- EP 2559470 A1

### Littérature non-brevet citée dans la description

- Tortuosity in electrochemical devices: a review of calculation approaches. *International Materials Reviews,* 2018, vol. 63 (2), 47-67